Europäisches Patentamt

(19) European Patent Office

Office européen des brevets

(11) Publication number: **0 102 928**
**A1**

## (12) EUROPEAN PATENT APPLICATION

(21) Application number: **83810393.5**

(22) Date of filing: **30.08.83**

(51) Int. Cl.³: **B 23 K 1/20**

(30) Priority: **03.09.82 CH 5234/82**

(43) Date of publication of application:
**14.03.84 Bulletin 84/11**

(84) Designated Contracting States:
**AT BE CH DE FR GB IT LI LU NL SE**

(71) Applicant: **Jaquet, Jean-Claude**
**Route de Bellegarde 32**
**CH-1249 Chancy(CH)**

(72) Inventor: **Jaquet, Jean-Claude**
**Route de Bellegarde 32**
**CH-1249 Chancy(CH)**

(74) Representative: **Mohnhaupt, Dietrich et al,**
**DIETLIN, MOHNHAUPT & CIE 3, quai du Mont-Blanc**
**CH-1201 Genève(CH)**

(54) **Soldering process.**

(57) The invention is related to a new process for the soldering without pickling nor flux of pieces having at least one metal or metallized surface. The process comprises the following steps: (1) electrodeposition of a soldering alloy, from a galvanic bath, of a metal or an alloy onto at least one of the pieces to be fixed together; (2) assembling the pieces by bringing them in intimate contact with their solderable surfaces, and (3) heating of at least the parts to be fixed, to a temperature in the range between the melting point of the solder and that of the material of said pieces.

Fig 1 (a) (b) (c)

(a) (b) (c)

EP 0 102 928 A1

## Soldering process

This invention belongs to the technical field of soldering. In particular, it refers to the soldering of pieces of metal or others, having at least one metallic surface or a surface capable of being metallized, said soldering being effected at elevated temperatures with the intermediate of a joining metal called solder.

The invention is related to a new and useful method for joining or connecting pieces of the kind depicted above, by the technique of soldering, and to the combined pieces obtained by this soldering process.

The techniques of soldering and brazing are well known since a rather long time. In the soldering and brazing methods, the pieces to be fixed together are placed in contacting relationship or in immediate proximity of each other, and at least the zones where the connection is to be made are heated for example with a hot soldering iron, a flame, a soldering arc, in an oven, by high frequency currents etc., and an addition metal called solder is provided at said heated regions or zones, said temperature being selected such that the solder melts and connects, after cooling and solidification, the two pieces at the zones which were heated. The solder has another composition than the material of said pieces and has a lower melting point than them. The pieces to be soldered do not melt, even superficially, during soldering. When the melting of the surface regions is intended and the added metal has about the same or a similar melting point or melting range as the metal of the pieces, this method is not called soldering but welding.

During soldering, the melted solder metal will wet the surfaces of the pieces to be soldered, and after cooling, the soldered connection represents a kind of sewing between the pieces which are now more or less solidly joined, depending upon the physical properties of the solder.

This technique has found a widespread use and has will been perfected. However, it still shows disadvantages or presents defects which, in some cases, can seriously compromise the success of this method.

Thus, since the solder must perfectly wet the surfaces to be joined, these surfaces must thoroughly be cleaned and kept clean during soldering. Furthermore, the effects of gases which are present at the soldering site like oxygen, nitrogen, water vapour, sulfur and its compounds (originating from alloy impurities); hydrogen, methane and combustion products when flame soldering, must be neutralized or, respectively, such gases must be kept away from the soldering site. These tasks

- 3 -        0102928

are generally accomplished by the addition to the solder or the soldering site of fluxing additives or deoxidizers like borax, colophonium  rosin, synthetic rosins etc. The drawback of these additives is the fact that their residues remain at the soldering site where the aspect is not very agreeable; these residues also favour corrosion and lower the mechanical strength of the solder.

In the field of jewelry and watchmaking where precious metals are used, the so-called pomade is used as an additive in soldering.  This pomade is a fine paste-like mixture containing borax powder or another flux, a gold alloy dust, and water.  Besides the disadvantages already described, it is difficult or even impossible to solder two interpenetrating pieces without leaving channels or other ducts allowing the water of said paste to escape; due to these channels or, alternatively, a relatively too large allowance in the dimensions of the interpenetrating regions of said pieces, the soldered connection will not be regular and uniform or will show solder-free zones, the joint will not be perfectly concentric in circular interpenetrating pieces, like pins in holes, the mechanical strength will be insufficient, etc.

Furthermore, the soldering zone cannot be limited to a predetermined range or region since it is difficult to mask the locations which must be remain free from solder.

Additionally, it has been stated that the classic soldering methods as described cannot very well be adapted to assembly line production, thus to automatisation, some rare cases excepted.

Finally, it is acknowledged that certain steps in soldering cannot be accomplished in a simple and economic manner. This applies e.g. to the soldering of labels, signets or markings of metal on even metal surfaces without showing the solder.

Now, it is a first and important object of this invention to obviate the drawbacks discussed above and to provide a new and useful method for the soldering of most different kinds of pieces, objets and articles having at least a metal surface or a surface capable of being metallized, with the use of a solder.

Another object of the invention is to provide such a process allowing soldering without a separate paste of flux or deoxidizer.

A further object of the invention is to provide a soldering method allowing a sharp delimitation and an exact predetermination of the soldering locations and regions.

Still another object of the invention is to improve soldering methods in order to make them appropriate for line processes, thus decreasing the overall cost of soldering.

These and still other objects are fulfulled by the process of the invention for soldering metallic pieces or such where at least one surface has been metallized. A layer of a solder is electrodeposited on this metallic surface, namely on one or both pieces to be soldered, and the pieces to be joined are placed in contact to each other. Then, the pieces are heated, or at least their regions or zones to be soldered, in a manner which may be known per se, but preferably in a heating oven, in order to melt the solder but not the pieces.  The heating temperature is selected to be higher than the melting point of the solder but of course lower than the metal of the pieces to be soldered.

The invention further covers the pieces which are soldered by the depicted method, particulary in the field of jewelry and watchmaking.

The first step of the process of this invention is the electroplating.  This technique is known per se to those skilled in the art; thenecessary pretreatments, post-treatments and intermediary treatments are effected as usual, see the general literature and handbooks on electroplating.  In detail, one would first clean the surface of the pieces to be soldered to remove all traces of non-metallic substances, dust, grease, rust etc.; then the surface of the pieces is rinsed and dried.  The regions which shall not be electroplated are then covered with a laquer layer or another removable protection such as plastic films.  The pieces are then immersed in an appropriate galvanic bath, and by application of an electrical current being at least partially a direct current, a layer of metal is deposited onto the immersed, free surface or surface region of the pieces.  The concentration, composition, temperature, current density, voltage and other parameters of the bath and the process are selected in an appropriate manner which is familiar to the one skilled in the art, see the handbooks of electrochemistry and electroplating.

In the piece to be soldered is of a non-metallic material like glass, synthetic but heat resistant resin like PPO (polyphenylene oxide) etc., porcelaine, stone, the first step after cleaning is the chemical deposit of a basic lining from an aqueous solution of a suitable metal such as copper, palladium or silver, said solution also containing a chemical reducing agent. Such "chemical flashes" are also well known to the man skilled in the art. The lining thus obtained is then subjected to electrodeposition of the solder directly or, optionally, after a reinforcing plating with one or more basic metal layers.

The solder which is deposited by electroplating is preferably an eutectic alloy. Such an alloy has the lowest melting point of all possible alloys of two given metals. Furthermore, an eutectic alloy does not show partial separation on cooling, and even after repeated melting and cooling, an eutectic alloy has always the same melting point. This feature is not common to other alloys forming mixed crystals since on partial segregation of non-eutectic alloys, the melting-point changes from one melting-solifying cycle to another.

In soldering pieces made from gold alloys according to the present invention, another problem exists which is overcome by this invention. Due to governmental prescriptions, gold alloys must not contain less gold than prescribed and certified by special stamps. When pieces of, say, 750 o/oo of gold must be soldered, no solder must be used having less than 750 o/oo of gold. Until now, such soldering methods have involved the use of a paste-like mixture of a flux, water and the dust of a gold alloy. The soldering using these pastes has not yielded clean and proper results, and costly and tedious post-treatments of cleaning and scraping were necessary.

The piece which has now received a layer of solder is cleaned, and the intermediate protecting layer, mentioned above, is removed. The piece is now ready for soldering. It is put into contact with the other piece or pieces to be soldered, at the sites where soldering is intended. The soldering step is performed without any deoxidizer nor flux; in some special cases, it may be advantageous to apply a thin layer of an organic deoxidizer such as rosin. It is needless to say that the metallic surface of the pieces which are to be soldered but which do not have a layer of solder on their surface, will thoroughly be cleaned to avoid any contamination which might compromise a good quality of the solder joint.

It will be sufficient for the purpose of this invention that, for each junction of two surfaces, only one of them carries the electrodeposited solder layer. However, nothing objects to that both surfaces are covered with the solder layer, besided economical considerations.

The next and last process step is the heating step. At least those parts of the pieces which are to be joined by soldering, but normally the whole pieces, are heated to a temperature higher than the melting point of the solder layer but lower than the first melting point of the material in the proximity of the soldering connection to be made. The material of the solder will melt and form a liquid which adheres to the surface of the pieces to be joined, and the latter are rigidly connected together after the cooling and resolidifying
of the solder.

The preferred conditions of this process step
will be described later.

In the prior art, some proposals have been
made to conduct the soldering process in a way that
comprises the electrodeposition of solder. Thus, German
Offenlegungsschrift no. 2,632,317 (to Brown, Boveri
& Cie AG) discloses a process for soldering two metals
wherein a solder layer is electroplated onto the metals,
and these metals are contacted and then heated to a
temperature well above the eutectic temperature of the
solder. However, although the expression "eutectic
temperature" is used, the publication neither discloses
nor suggests the use of eutectic alloys as a solder.
As metals to be joined by soldering, only copper
and steel are disclosed, and as the solder, the only
disclosure refers to a "tin-lead solder according to
DIN" which does not comprise even one eutectic mixture.
Furthermore, this prior publication has no relation whatsoever to the soldering of noble or precious metals where
the classic solder is replaced by special solder metals
or alloys since, as has already been mentioned a
certain, certified minimum gold title must be maintained
also in soldering.

French patent application no. 2,312,095
(to Brown, Boveri & Cie AG) refers to permanent magnets
of a cobalt-rare earth metal alloy which are fixed to
iron pieces. As solder alloys, this publication suggests,
inter alia, alloys containing two or three metals selected
form Cu, Au, Ag, Ni, Sn, and some compositions are indicated. However, this reference does not mention, disclose or suggest the application of these solder alloys or the disclosed method to gold alloys or jewelry.

The invention will now be illustrated by the description of preferred embodiments thereof, and this description is not intended to limit the scope of the present invention. Furthermore, reference is made to the drawing wherein :

- FIG. 1    shows, schematically and in a vertically sectional view, in the stages (a), (b) and (c) the manufacture of a workpiece in watchmaking or jewelry where a pin is soldered into a block of a gold alloy,

- FIG. 2    schematically represents, in a vertically sectional view, three successive steps (a), (b) and (c) in the manufacture of a bracelet, especially for a wrist watch, comprising a mobile element situated between two other elements which are fixed together, and

- FIG. 3    shows in three steps (a) to (c) schematically by a vertically sectional view too, the soldering of a metallic signet or label onto a metallic block; FIG. 3 (c) being a top view of the finished article.

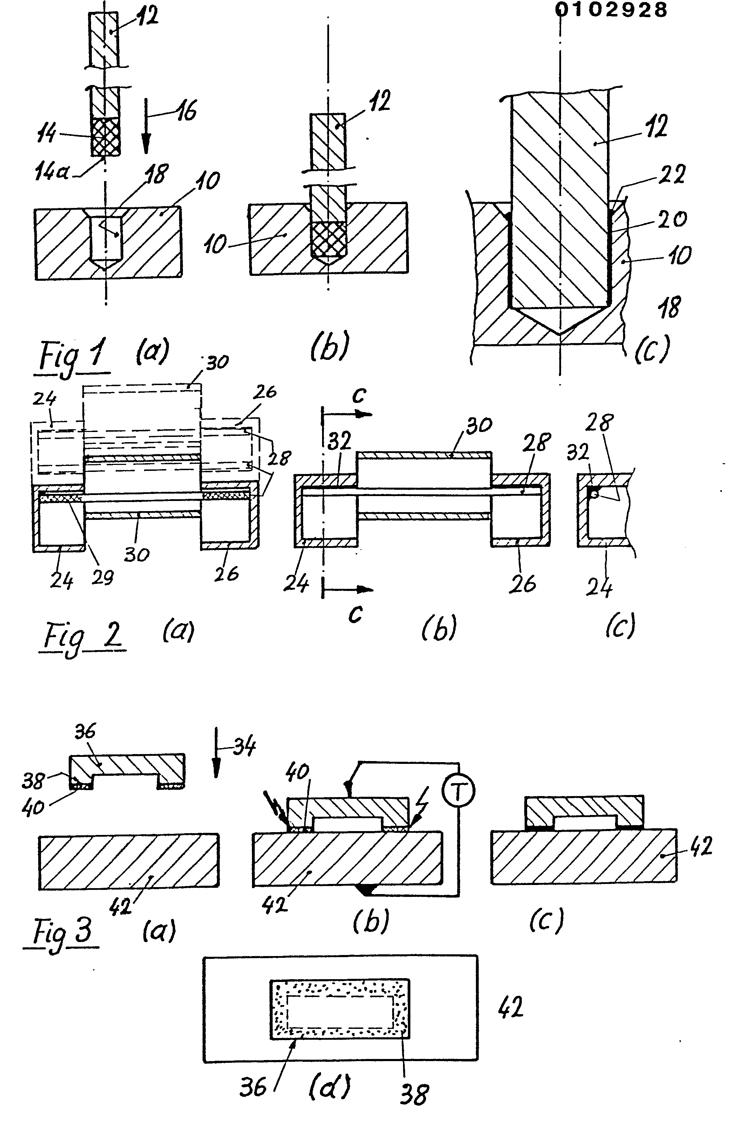

In FIG. 1 (a), a metal block 10, for example of gold, wherein a pin 12 is to be fixed by soldering, is shown in a sectional view. The lower part of the pin 12 is covered by a layer 14 - which is not shown in sectioned mode - of a solder which had been applied before by electrodeposition. This solder layer is represented by crossed hatching. The frontal face of the pin 12 may also carry such a solder layer (reference numeral 14a). The pin 12 is now inserted, following the direction of arrow 16, into the boring 18 of the block 10, see FIG. 1 (b). The diameter of the boring 18 is selected such as to receive the lower part of pin 12 without clearance, even with a certain friction requiring some force to drive the pin home into block 10.

This situation reflects a major, unforeseen advantage of this invention. It has namely surprisingly been found that the metallic solder layers 14, 14a which have been electrodeposited, have a density which is inferiour to the same metal after melting and resolidifying, and thus have a greater volume than the metal when melted and solidified. This fact allows a firm mechanical fixation of the pieces to be soldered, with a good adjustment, and auxiliary or temporary constructions to support the pieces to be soldered in the desired geometric relationship have now become superfluous without entraving a free flowing of the molten solder.

Now, the combination of FIG. 1 (b) is placed in an oven where the temperature is controlled to a value higher than the melting point of the solder. The piece is left in the oven for the time necessary to melt the solder and to join the pieces. This time is depending upon the temperature and the heat capacity of the pieces and is determined by a simple experiment.  When soldering has occurred, the piece is removed from the oven, and the product of FIG. 1 (c) is obtained which is an enlargement in relation to FIG. 1 (a) and (b).  The solder layer 20, represented in thick lines, perfectly covers the walls with which it is in contact, and it extends even to the free surfaces ot the boring 18 forming a bead 22 if the quantity of solder was sufficient.

This method gives a homogeneous solder connection free from discontinuities and distorsions by flux residues (since no flux is used), of the pin with the block.

FIG. 2 (a) to (c) show the manufacture of articulated links, for example of a bracelet for wrist watches.  FIG. 2 (a) and 2 (b) are elevated sectional views whereas FIG. 2 (c) is a sectional view in the plane  according to line C-C in FIG. 2 (b).

Each link is composed of two lateral pieces 24 and 26 which are connected together by at least one bar 28; a central element 30 is traversed by the bar or bars 28 and serves to the lengthwise prolongation of the bracelet.  The next adjacent link 24', 26', 30' is shown in broken lines.

In order to manufacture the bracelet, the lateral pieces 24 and 26 are connected to the central element 30 by the bar(s) 28 which are provided, at their outer portions, with a solder layer 29 applied by electroplating.  The assembled pieces are then passed into an oven as described, and in an analoguous way, a perfect solder connection 32 (see FIG. 2 (b) and 2 (c)) is obtained covering the end portions of the bar 28 and the corners of the lateral pieces 24 and 26 but not injuring the free displacement of the central link element 30.

Until now, it has not been possible to obtain the same result without stating the presence of staining flux residues like borax in the interiour of the link; these residues are nearly inaccessible and provoke or promote corrosion.

FIG. 3 (a) to 3 (d) represent the technique of the new process of this invention to obtain the soldering of an escutcheon, a label, a signet or similar objects onto a metal plate.

According to FIG. 3 (a), a signet 36 of which the lower, protruding portion 38 has beforehand been provided by electroplating with a metallic solder layer 38, is placed by moving it along the arrow 34, on the upper surface of a metal block 42. Thereafter, a strong soldering current or, alternatively, a high frequency voltage are applied to the block 42 and the signet 36, current or voltage which come from an appropriate electrical source T (not represented in detail), see FIG. 3 (b).

At the locations which are marked by a lightning sign, the electrical resistance has its maximum, and the contact surface is therefore strongly and rapidly heated thus causing the solder 40 to melt. After cooling, a smooth, even, uniform and superficial junction is obtained  (see FIG. 3 (d))whereas in using the methods of the prior art comprising the application of soldering paste, it is impossible for the solder to reach the lower surface of the edge 38, which is in contact with the block 42.

FIG. 3 (d) shows a top elevational view of the finished article, the solder layer being indicated by dotted regions.

The deposition of solder metal by electroplating techniques from galvanic baths is a method known to the man skilled in the art, as it has already been mentioned above. A layer is preferred whose thickness is just sufficient to obtain a sufficiently solid soldering connection; this preferred embodiment can rapidly be put into practice by one or two simple experiments. The said thicknesses should be in the range of 0.01 to 0.5 mm.

The most important features and properties of the solders and soldering connections of this inventions are the following :

The melting point of the solder is adapted to the metals to be soldered; it must be well below that of the metal having the lowest melting point. A difference between the melting point of the solder and that of the metal to be soldered may be up to 300°C and more; for the soldering of pieces made from gold alloys, a difference in the range of 50 to 200°C is generally employed, and, preferably, a difference of from 20 to 150°C, according to the particular case and the absolute value of the melting point of the metal.

The wetting force : the solder when melted, must wet the surface of the pieces to be soldered, in a perfect manner.  Normally, no special flux is used.

Alloy : The solder must not "peel" neither in the hot nor in the cold state. This will say that the solder must remain in the state of an alloy which is sufficiently stable at all temperatures in the range between the use and the soldering temperatures.  Solders are preferred which have at least one common metal with the metals to be soldered.

For applications in the fields of jewelry and watchmaking, the following alloys and soldering metals - in general all alloys - may be listed as examples; the solder alloys can be electrodeposited :

TABLE 1  -  USE ALLOYS

| Alloy of the pieces to be soldered, no. | Compositions, o/oo | | | melting point, °C approx. |
|---|---|---|---|---|
| | Au | Ag | Cu | |
| 1 | 750 | 250 | -- | 1060 |
| 2 | 750 | 10 | 240 | 925 |
| 3 | 750 | 100-200 | 150-50 (18 carat gold) | 890 |

TABLE 2  -  SOLDER ALLOYS

| Alloy no. | Colour standard | Composition, o/oo | | | | | melting point, °C approx. |
| | | Au | Ag | Cu | Zn | Cd | |
| --- | --- | --- | --- | --- | --- | --- | --- |
| 3 | 3N | 750 | 90 | 60 | 100 | -- | 760 |
| 4 | 2N | 750 | -- | 20 | -- | 230 | 720 |
| 5 | pink | 750 | -- | 120 | -- | 130 | 740 |
| 6 | pink | 750 | -- | 110 | -- | 140 | 740 |

It can be seen from the Tables that all these solder alloys have a melting point well below the alloys of the pieces to be used having the same gold title. These different solders allow an adaptation to the colour of the metals to be soldered.

Other solder alloys can be selected in function of the above listed desired or necessary properties; see pages D-222 to D-224 of "Handbook of Chemistry and Physics", 59th ed., CRC Press, 1978.

For the soldering step, the heating may be effected by conventional means known per se; for the watchmaking and jewelry pieces which are rather small, the use of soldering ovens is preferred wherein the pre-assembled pieces are subjected to a controlled temperature well adapted to the soldering step to be performed. Generally, an inert atmosphere, a reducing atmosphere, or an atmosphere having oxidizing components, will be used. Thus, for example, preferred atmospheres in the oven are firstly the catalytic splitting product of ammonia, i.e. ammonia is passed through a heated catalyst bed, and the discharging atmosphere composed mainly of nitrogen and hydrogen (with traces of ammonia) is entered into the oven, and secondly such atomospheres containing some percent of oxygen, obtained by mixing the above mentioned $N_2 + H_2$ atmosphere with small volumes of air.

However, a heating by flames, by induction, resistive conduction or high frequency is also possible.

The following example illustrates the electro-plating of small objects by an eutectic soldering alloy in the field of low temperature soldering.

<u>EXAMPLE</u>

Alignment pins (2 x 20 mm) to be fixed by soldering into steel blocks are first cleaned by ultrasonic treatment in, succesively, a mixture of nitric and sulfuric acid , water, trichloroethylene and acetone, then dried in hot air and dipped to a depth of 10 mm into a protective laquer solution, and finally dried.

Then the pins are vertically immersed into a filtered aqueous bath containing, per liter, 22 g of $Cd(BF_4)_2$, 87.5 g $Sn(BF_4)_4$, 55 g $Pb(BF_4)_2$, 10 g $HBF_4$ and 20 g urea. The bath is kept at $45^{\circ}C$, with stirring. Direct current at 5 V is applied to a number of cylindrical carbon anodes and the pins as cathodes, at a current density of about 4.5 $A/dm^2$. After 35 minutes, a grey alloy layer of about 12 microns thickness is deposited. After rinsing the distilled water and alcohol and drying, the pins are ready for soldering.

The soldering alloy melts at about 150$^{\circ}$C and was found to be composed to 18 % by weight of cadmium, 50.2 % of tin and 31.8 % of lead corresponding very closely to the eutectic composition.

The new process of the invention is preferably used where a perfect, precise clean and high quality soldering connection is required. The application fields are therefore preferably, besides jewelry and watchmaking, the electronics, space technics, nuclear technics, precision mechanics, electrotechnics, technics in chemical, physical, biological and medical laboratories and pilot plants, in medecine, optics, etc.

However, this process offers advantages in still other fields : for example the solid and durable fixation of a copper bottom to a cooking pot made of stainless steel or of aluminium; the soldering of aluminium to brass; of pre-metallized glass with other metals or with pre-metallized glass or plastics, etc. In the case of the junction of these last materials, thin metal layers between the basic material and the solder layer should be provided in order to allow for the compensation of the differences in thermal dilatation and in composition. These layers may be applied par electroplating or laminating.

CLAIMS

1. - A process for soldering pieces having at least one metallic surface using a soldering metal, characterized by the fact of (a) depositing by way of galvanic plating an alloy having entectic composition, on the surface area where a soldering connection is to be made, of at least one of the pieces to be soldered together, then (b) placing the pieces with the zones to be soldered together in contact with each other, and (c) provoking the melting of the entectic soldering alloy by raising the temperature of the said zones to a level above the melting point of said entectic alloy.

2. - The process of claim 1, characterized by the fact of soldering two pieces together, one of them having been provided with said entectic soldering alloy.

3. - The process of claim 1, characterized by the fact that at least one on the pieces to be soldered together consists of a non-metallic material, and on at least one of the surface of said piece is deposited one or several metallic layers, the last one of said layers being the entectic soldering alloy which is deposited by electroplating.

4. - The process of any one of the preceding claims, characterized by the fact that the heating of said pieces placed in contact with each other is accomplished in an oven.

5. - The process of claim 4, characterized by the fact that an inert atmosphere is maintained in the oven during heating.

- 2 -                                    0102928

6. - The process of claim 4, characterized by the fact that a weally oxidising atmosphere is maintained in the oven during heating.

7. - A process for soldering pieces consisting at least partially of gold or a gold alloy, characterized by the fact of (a) electroplating at least part of the surface of a piece made of gold or a gold alloy, a soldering alloy layer having the same gold content as said piece but containing an alloyed metal capable of lowering the melting point of said soldering alloy by $50^{\circ}$ to $200^{\circ}C$ compared with the gold or the gold alloy of said piece, said alloyed metal in the soldering alloy being selected from copper, zinc, cadmium and mixtures thereof, (b) placing the pieces with the zones to be soldered togehter in contact with each other, and (c) provoking the melting of the soldering alloy by raising the temperature of said zones to a level above the melting point of said soldering alloy.

8. - The process of claim 7, characterized by the fact that the surface area of the pieces or pieces which are to remain free from soldering alloy, are covered by a laquer coating before the step of electroplating.

9. - The process of claim 7 or 8, characterized that the pieces to be soldered together, are articles of jewelry, watches or their parts.

10. - Pieces of industrial or domestic use, soldered by the application of the process of any one of the preceding claims.

**Fig 1**  (a)  (b)  (c)

**Fig 2**  (a)  (b)  (c)

**Fig 3**  (a)  (b)  (c)  (d)

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | FR-A-2 312 095 (BBC) * Pages 6,7 * | 1-9 | B 23 K 1/20 |
| X,Y | DE-A-2 632 317 (BBC) * Page 1 * | 1-3,10 | |
| Y | GB-A-2 072 073 (IAN HEATH) * Abstract * | 1-10 | |
| Y | DE-A-3 104 107 (SEMIKRON) * Abstract * | 1-3,10 | |
| Y | FR-A-2 377 169 (COMPTOIR LYON-ALEMAND-LOUYOT) * Page 4 * | 7-9 | |
| A | DE-A-2 705 568 (LEYBOLD-HERAEUS) | | B 23 K 1/00 |

TECHNICAL FIELDS
SEARCHED (Int. Cl. ³)

The present search report has been drawn up for all claims

| Place of search | Date of completion of the search | Examiner |
|---|---|---|
| THE HAGUE | 05-10-1983 | HOORNAERT W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document